# EUROPEAN PATENT APPLICATION

(11) **EP 2 065 224 A1**
(43) Date of publication of application: **03.06.2009**
(21) Application number: 08169485.3
(22) Date of filing: 20.11.2008
(51) Int. Cl.: B60C 9/02, B60C 9/18

(54) **Pneumatic tire**

(30) Priority: 27.11.2007 US 945606
(71) Applicant: The Goodyear Tire & Rubber Company, Akron, OH 44316-0001 (US)
(72) Inventor: Scarpitti, Anthony John, Akron, OH 44312 (US)
(74) Representative: Kutsch, Bernd

(57) **Abstract**

A tire casing (302) is formed on an annular toroidally shaped building surface. The tire casing 302 has a cord attachment elastomeric layer (250) extending over the toroidally shaped building surface to a pair of radial inner ends (32R); a first and second bead stack (220), each bead stack (220) having an axially inner stack (222) and an axially outer stack (224) the axially inner stack (222) attached to one of the radial inner ends (32R) of the first elastomeric layer (250); one or more continuous lengths of first ply cords (32A), and one or more continuous lengths of second ply cords (32B). The one or more continuous lengths of the first ply cords (32A) in combination with the one or more continuous lengths of the second ply cords (32B) form a bias angled cord reinforced belt structure, the first ply cords (32A) forming one cord reinforced sidewall and the second ply cords (32B) forming an opposite cord reinforced sidewall.

## Description

### Field of the Invention

This invention relates to pneumatic tires generally. More specifically, it relates to pneumatic tires having a casing construction including at least one ply layer and a belt reinforcing structure built on an annular tire building surface by an apparatus for manufacturing a toroidal casing wherein at least arcuate extending portions of the ply and belt structure are made from the continuous lengths of same ply cord in the absence of cut cord ends other than one initial end and one terminal end of the entire cord length.

### Background of the Invention

Historically, the pneumatic tire has been fabricated as a laminate structure of generally toroidal shape having beads, a tread, belt reinforcement, and a carcass. The tire is made of rubber, fabric, and steel. The manufacturing technologies employed for the most part involved assembling the many tire components from flat strips or sheets of material. Each component is placed on a building drum and cut to length such that the ends of the component meet or overlap creating a splice.

In the first stage of assembly the prior art carcass will normally include one or more plies, and a pair of sidewalls, a pair of apexes, an innerliner (for a tubeless tire), a pair of chafers and perhaps a pair of gum shoulder strips. Annular bead cores can be added during this first stage of tire building and the plies can be turned around the bead cores to form the ply turnups. Additional components may be used or even replace some of those mentioned above.

This intermediate article of manufacture would be cylindrically formed at this point in the first stage of assembly. The cylindrical carcass is then expanded into a toroidal shape after completion of the first stage of tire building. Reinforcing belts are added to form a casing and then tread is added to this intermediate article during a second stage of tire manufacture, which can occur using the same building drum or work station.

Each of these layers of cord reinforced plies has the cords oriented parallel and cut to precise widths in the building of the tire. These layers of cut widths provide a pair of edges that are prone to cause a variety of tire related problems such as belt edge separation or lifting, carcass ply turnup separation, to name a few.

This form of manufacturing a tire from flat components that are then formed toroidally limits the ability of the tire to be produced in a most uniform fashion. As a result, an improved method and apparatus has been proposed, the method involving applying an elastomeric layer on a toroidal surface and placing and stitching one or more cords in continuous lengths onto the elastomeric layer in predetermined cord paths. The method further includes dispensing the one or more cords from spools and guiding the cord in a predetermined path as the cord is being dispensed. Preferably, each cord, pre-coated with rubber or not so coated, is held against the elastomeric layer after the cord is placed and stitched and then indexing the cord path to a next circumferential location forming a loop end by reversing the direction of the cord and releasing the held cord after the loop end is formed and the cord path direction is reversed. Preferably, the indexing of the toroidal surface establishes the cord pitch uniformly in discrete angular spacing at specific diameters.

The above method is performed using an apparatus for forming an annular toroidally shaped cord reinforced ply which has a toroidal mandrel, a cord dispenser, a device to guide the dispensed cords along predetermined paths, a device to place an elastomeric layer on the toroidal mandrel, a device to stitch the cords onto the elastomeric layer, and a device to hold the cords while loop ends are formed. The device to stitch the cords onto the elastomeric layer includes a bi-directional tooling head mounted to a tooling arm. A pair of roller members is mounted side by side at a remote end of the tooling head and defining a cord exiting opening therebetween. The arm moves the head across the curvature of a tire carcass built on a drum or core while the cord is fed through the exit opening between the rollers. The rollers stitch the cord against the annular surface as the cord is laid back and forth across the surface, the first roller engaging the cord along a first directional path and the second roller engaging the cord in a reversed opposite second directional path.

The toroidal mandrel is preferably rotatable about its axis and a means for rotating is provided which permits the mandrel to index circumferentially as the cord is placed in a predetermined cord path. The guide device preferably includes a multi axis robotic computer controlled system and a ply mechanism to permit the cord path to follow the contour of the mandrel including the concave and convex profiles.

This type of directing the ply cord path has been further refined and greatly improved by an apparatus having a plurality of applicator heads positioned to assigned regions of the annular surface.

In US-A- 2007/0125478, the multiple application head is described and shown in detail.

This apparatus for applying a cord on a toroidally shaped building surface has provided a unique opportunity to design tires in a new and totally unappreciated fashion. The present invention as described below provides a new casing construction opportunity that eliminates any cut edges above the bead cores. The invention enables the tire to be build virtually free of such stress risers while potentially reducing the overall weight of the tire dramatically.

### Summary of the Invention

The invention relates to a tire casing according to claims 1 or 11 and to a tire comprising such a casing according to claim 14.

Dependent claims refer to preferred embodiments of the invention.

In one aspect of the invention, a tire casing is formed on an annular toroidally shaped building surface. The tire casing has a cord attachment elastomeric layer extending over the toroidally shaped building surface to a pair of radial inner ends; a first and second bead stack, each bead stack having an axially inner stack and an axially outer stack the axially inner stack attached to one of the radial inner ends of the cord attachment elastomeric layer; one or more continuous lengths of first ply cords, and one or more continuous lengths of second ply cords. The one or more continuous lengths of the first ply cords in combination with the one or more continuous lengths of the second ply cords form a bias angled cord reinforced belt structure, the first ply cords forming one cord reinforced sidewall and the second ply cords forming an opposite cord reinforced sidewall.

The one or more continuous lengths of first ply cords each having two ends and a plurality of radially inner return loops between the axially outer stack and the axially inner stack of the first bead stack. The first ply cords extend in a radial orientation along a contour of the building surface to a first shoulder region wherein the inclination changes from radial to a bias angle across a crown region to a second shoulder wherein a shoulder loop is formed and the first ply cord returns along parallel to the bias angle to the opposite first shoulder and changes to a radial angle to a radially inner return loop at or below the first bead stack in a repeating fashion from the first bead stack to a second shoulder. The one or more continuous lengths of second ply cords extend from the second bead stack to the second shoulder in a radial inclination and thereafter changing orientation to a bias angle equal but oppositely oriented relative to the bias angle of the first ply cord and extending to the first shoulder wherein a shoulder loop is formed and the second ply cord returns along parallel to the bias angle of the second ply cord to the second shoulder and changes to a radial angle to a radial inner return loop at or below the second bead stack in a repeating fashion.

Preferably, each of the one or more continuous lengths of the first ply cord and the second ply cords have the two ends being an initial end and a terminal end defining the continuous length of each of the first or second ply cords. Preferably, each initial end and each terminal end is located between or radially inward of the axially inner and axially outer first or second bead stacks.

Each of the continuous lengths of first ply cords and second ply cords when applied to the casing preferably extend arcuately between at least 30 degrees and 360 degrees around the circumference. The tire casing may also include: an inner liner layer which may or may not constitute the cord attachment elastomeric layer to which the continuous cords are adhered to, the inner liner having a pair of radially inner ends; a pair of sidewalls; and a pair of chippers, one chipper being attached to each end of the inner liner to form an improved tire with the inventive tire casing and a tread. In this embodiment the continuous lengths of the first ply cord or cords are preferably secured between the first bead stacks and do not extend to the opposite second bead stack, and the continuous lengths of the second ply cord are preferably secured between the second bead stacks and do not extend to the first bead stack. The continuous length of each first ply cord preferably forms one radially extending cord reinforced arcuate portion between the first bead stack and the first shoulder and one cord reinforced belt arcuate portion extending along a bias angle of 17 degrees to 27 degrees between the first and second shoulders and the continuous lengths of the second ply cord preferably form one radially extending cord reinforced arcuate portion between the second bead portion and the second shoulder and one cord reinforced belt arcuate portion extending along a bias angle of 17 degrees to 27 degrees between the second first and shoulders equal but opposite oriented relative to the belt portion of the first ply cord. The continuous lengths of first and second ply cords between the first and second shoulders preferably form two oppositely oriented belt layers in the absence of any underlying radially oriented ply cords between said shoulders.

In an alternative embodiment, the tire casing has the each of the one or more continuous lengths of first ply cords having two ends defining the length and a plurality of first return loops and a plurality of second return loops located between the axially outer stack and the axially inner stack of the respective first and second bead stacks; the first ply cords extending in a radial orientation from a first bead stack along a contour of the building surface and the cord attachment elastomeric layer to a first shoulder region wherein the inclination changes from radial to a bias angle across a crown region to a second shoulder region wherein the inclination changes to a radial angle to form a first ply path at a radially inner return loop at the second bead stack and the continuous length of the first ply cord returns spaced but parallel to the first ply path to a return loop at the first bead stack in a repeating fashion; and each of the one or more continuous second ply cords extending in a similar repeating fashion as the first ply cords between the first and second bead stacks to form a second ply path, wherein the bias angle between the first shoulder and the second shoulder is equal but oppositely oriented relative to the bias angle of the first ply path; and wherein the one or more continuous lengths of the first ply cords in combination with the one or more continuous lengths of the second ply cords form both radially oriented sidewall cords and a bias angled cord reinforced belt structure preferably oriented at an angle between 17 degrees and 27 degrees. In the alternative tire casing the first ply cords are spaced circumferentially with second ply cords lying between each pair of first ply cords in a repeating pattern, as in the first embodiment the bias angled belt reinforcing cords do not overlay any radially oriented ply cords.

### Definitions

The following definitions are applicable to the present invention.

"Aspect Ratio" means the ratio of a tire's section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chaffers.

"Belt Structure" or "Reinforcing Belts" means one or preferably at least two annular layers or plies of parallel cords, woven or unwoven, underlying the tread, unanchored to the bead. The Belt Structure preferably has both left and right cord angles in the range from 17° to 27° with respect to the equatorial plane of the tire.

"Circumferential" means lines or directions extending along the perimeter of the surface of the annular tread perpendicular to the axial direction.

"Carcass" means the tire structure apart from the belt structure, tread, undertread, over the plies, but including beads, if used, on any alternative rim attachment.

"Casing" means the carcass, belt structure, beads, sidewalls and all other components of the tire excepting the tread and undertread.

"Chafers" refers to narrow strips of material placed around the outside of the bead to protect cord plies from the rim, distribute flexing above the rim.

"Cord" means one of the reinforcement strands which the plies in the tire comprise.

"Equatorial Plane (EP)" means the plane perpendicular to the tire's axis of rotation and passing through the center of its tread.

"Footprint" means the contact patch or area of contact of the tire tread with a flat surface at zero speed and under normal load and pressure.

"Innerliner" means the layer or layers of elastomer or other material that form the inside surface of a tubeless tire and that contain the inflating fluid within the tire.

"Normal Inflation Pressure" means the specific design inflation pressure and load assigned by the appropriate standards organization for the service condition for the tire.

"Normal Load" means the specific design inflation pressure and load assigned by the appropriate standards organization for the service condition for the tire.

"Placement" means positioning a cord on a surface by means of applying pressure to adhere the cord at the location of placement along the desired ply path.

"Ply" means a layer of rubber-coated parallel cords.

"Radial" and "radially" mean directions radially toward or away from the axis of rotation of the tire.

"Radial Ply Tire" means a belted or circumferentially-restricted pneumatic tire in which at least one ply has cords which extend from bead to bead are laid at cord angles between 65° and 90° with respect to the equatorial plane of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tread Width" means the arc length of the tread surface in the axial direction, that is, in a plane parallel to the axis of rotation of the tire.

"Winding" means a wrapping of a cord under tension onto a convex surface along a linear path.

### Brief Description of the Drawings

The invention will be described by way of example and with reference to the accompanying drawings in which:
FIG. 1 is a perspective view of an exemplary tire making station employing a plurality of ply laying assemblies, for manufacturing the tire casing of the present invention.
FIG. 2 is a side elevation view of the tire making station showing spatial dispensation of plural ply laying assemblies about a tire build core.
FIG. 2A is an enlarged perspective view of one ply laying assembly disposed at an initial position relative to a tire build core that is partially sectioned for illustration.
FIG. 2B is an enlarged perspective view of the ply making assembly shown in FIG. 2A at a subsequent intermediate position along a ply laying path relative to the tire build core.
FIG. 2C is an enlarged perspective view of the ply laying assembly shown in FIG. 2A at a subsequent terminal position relative to the tire build core.
FIG. 3 is a front elevation view shown in partial transverse section for illustration of a ply laying apparatus configured pursuant to the invention at the terminal position relative to the tire build core.
FIG. 4 is an enlarged perspective view of ply laying assembly.
FIG. 5 is a rear elevation view of the ply laying assembly.
FIG. 6 is a side elevation view of the ply laying assembly showing sequential operation of the support arm slide mechanism in phantom.
FIG. 7 is a transverse section view through the ply laying apparatus.
FIG. 8 is a side elevation view of the ply laying apparatus co-mounted adjacent a cord tensioning and feed assembly.
FIG. 9 is an enlarged perspective view of the cord tensioning and feed assembly.
FIG. 10 is a transverse section view through the ply laying end of arm tooling shown moving in a tilted forward direction.
FIG. 11 is a cross-sectional view of the tire casing made according to a first embodiment of the invention.
FIG. 12A is a perspective view of the continuous lengths of first ply cords as applied over a cord attachment elastomeric layer on the toroidally shaped building core to form the first embodiment of FIG. 11.
FIG. 12B is a perspective view showing the start of the formation of the second pl cord overlaying in the belt region the already laid first ply cord. Only a portion of the construction of the second ply cord being shown to facilitate viewing.
FIG. 13 is a cross-sectional view of the tire casing made according to an alternative embodiment of the invention.
FIG. 14A is a perspective view of the continuous lengths of first ply cords as applied over a cord attachment elastomeric layer on the toroidally shaped building core to form the alternative embodiment of FIG. 13.
FIG. 14B is a perspective view of the start of the application of the second ply cord overlaying the first ply cord in the belt region and interposed between the sidewall regions to form the cord reinforcement of the second embodiment of figures 13 and 14A.

### Detailed Description of the Invention

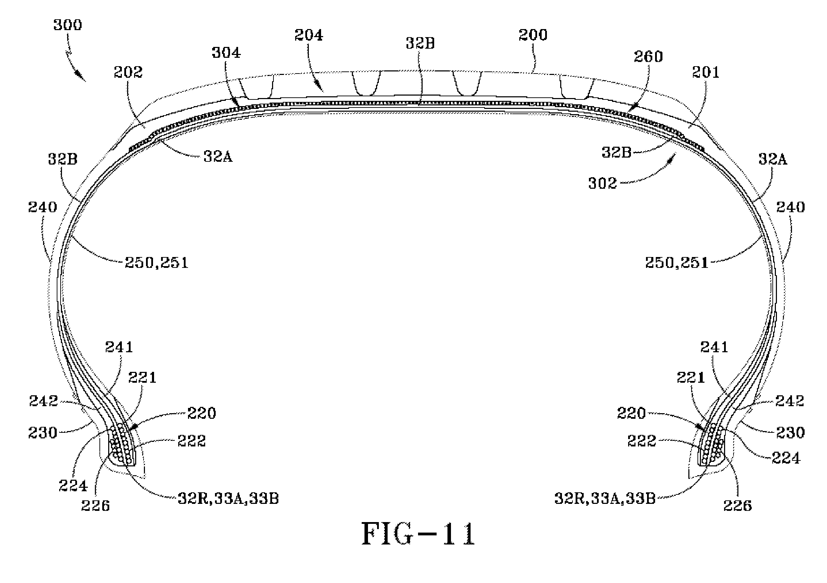

Referring initially to Figures 11-14B two embodiments of the present invention tire construction are shown. Each embodiment employs continuous lengths of ply cords 32A, 32B to form the radial oriented cord reinforcement between the bead stacks 220 and each tire shoulder in the tires sidewall region. These cords 32A, 32B then extend at least partially across the tire casing 302 between the two shoulder regions along a bias angle to form two belt reinforcing layers of cords oriented at equal but opposite cord angles over the crown of the tire casing. Each embodiment has no radially extending ply cords traversing under the belt structure 304 and there are no cut cord end in the tire casing 302 except for the initial end 33A of a continuous cord 32A, 32B and the terminal end 33B of a continuous cord 32A, 32B. Preferably these ends are both located in or below the bead stacks 220.

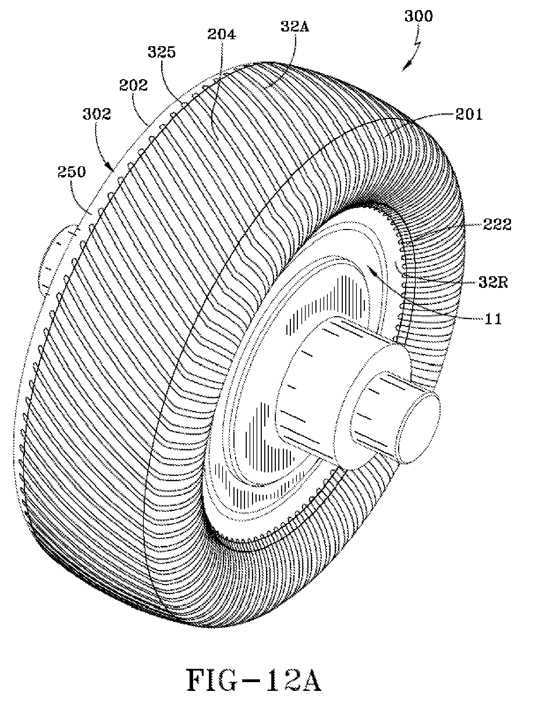

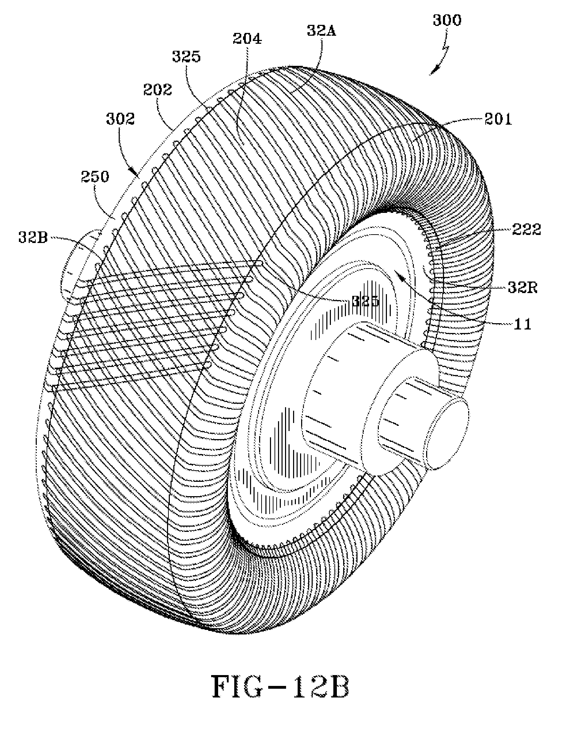

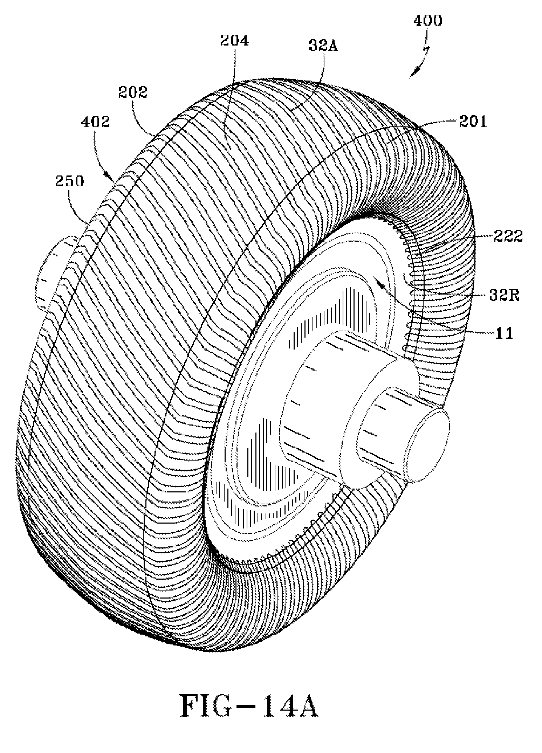

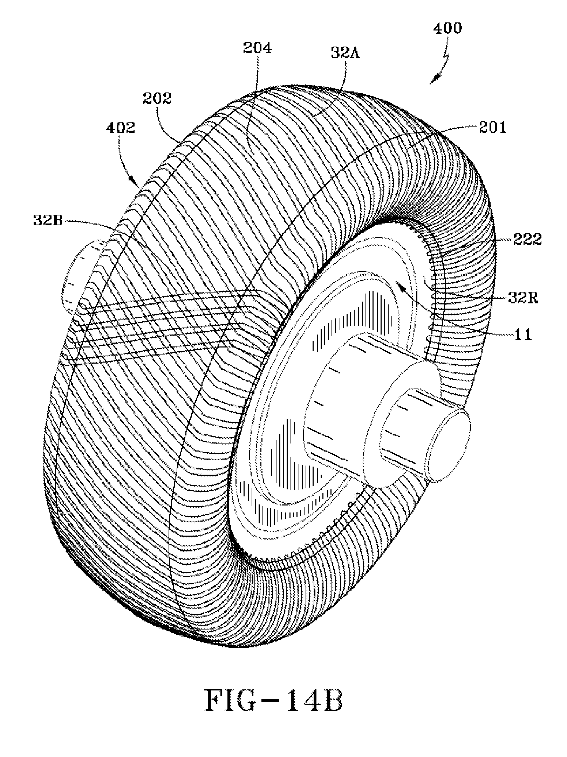

With particular reference to Figures 11 and 12, the first embodiment tire 300 has a unique cord construction. In the illustrated embodiments of Figures 12A, 12B and 14A, 14B the cord spacing is shown widely spaced and substantially more open than would actually be used. The reason for this is to make the appearance of the ply cords 32A and 32B stand out with better clarity. One skilled in the art will appreciate the rivet or spacing between actual cords will be much closer in spacing in an actual tire 300 and 400.

As shown in Figure 12 the tire 300 has a radially outer tread 200 overlaying the tire casing 302 in the crown region 204 defined and between a first and second shoulder region 201, 202 directly under the tread 200 is shown an optional spirally wound cord overlay structure 260. Extending radially inwardly is a cord reinforced belt structure 304 made of a first layer and a second layer of first cords 32A and second cords 32B, respectively. The first cords 32A are formed from one or more continuous lengths of first cords 32A each of which has two ends, an initial end 33A and a terminal end 33B. As shown first ply cords 32A extend from the initial end 33A located between and below the first bead stack 220. This first bead stack 220 has an axially inner bead stack 222 made of wire 221 wound in a radial outward extending single stack. The first ply cord 32A is positioned axially outward and adjacent this axially inner stack 222 and sandwiched between an axially outer stack 224 as illustrated. This first bead stack 220 has a third radial stacked layer 226 axially outward of the axially outer stack 224 for added structural stiffness. More or less of these additional bead stacks can be used depending on the tire application.

The opposite side of the tire 300 has a second bead stack 220 of similar construction as the first bead stack 220. Elastomeric apex layers 241, 242 of rubber are positioned on each side of the bead stacks 220 and the ply cords 32A and 32B to surround and stiffen this bead portion of the tire 300. On an axially outer side of the tire casing 302 is a chaffer rubber layer 230 and radially above the chaffer layer 230 is a sidewall layer 240 extending radially upward to the tread 200 and adjacent the first or second ply cords 32A, 32B.

Radially inward of the axially inner bead stacks 220 on each side of the tire casing 300 is a radially inner cord attachment elastomeric layer 250 which preferably can be an air impervious inner liner 251. Typical such layers 251 are made of holobutyl rubber or similar materials to provide an air barrier for tubeless tires. The cord attachment layer as shown actually has the apex layer 241 and the inner liner portion 251 in combination forming the cord attachment surfaces. As described the surface used to apply the cords to is the attachment layer which can be any number of distinct elastomeric layers, preferably applied as strips over the building surface.

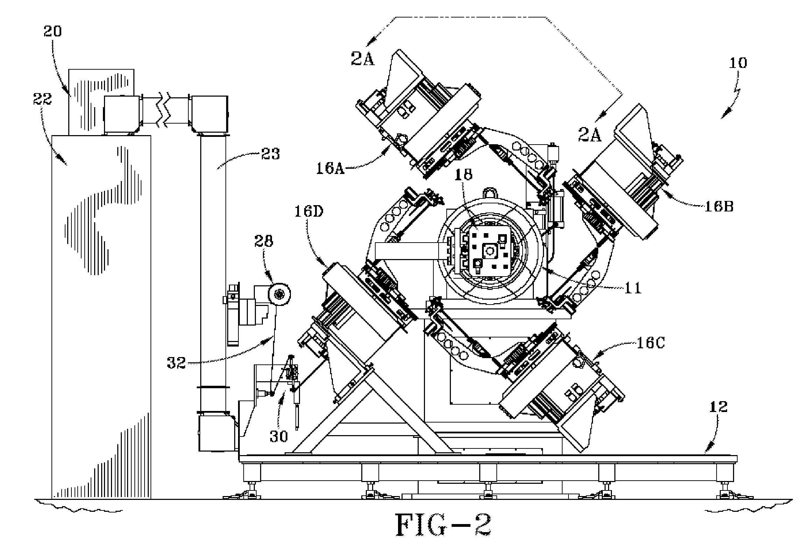

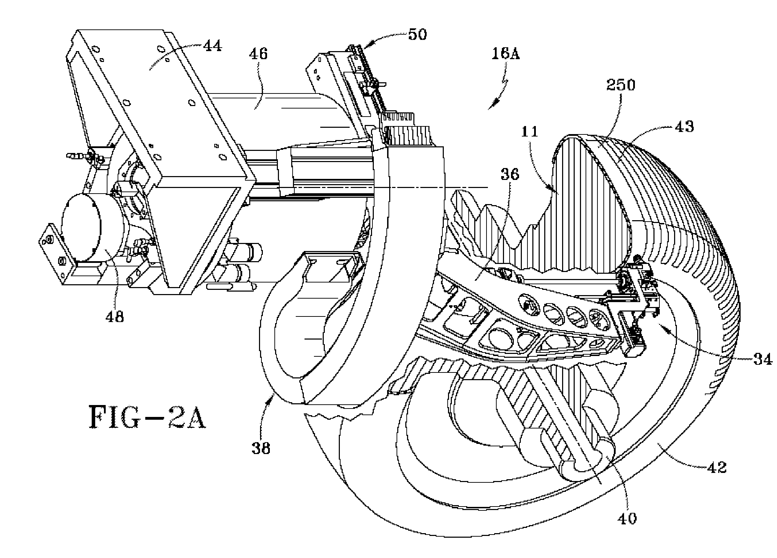

The ply cords 32A and 32B are precisely positioned directly onto this cord attachment elastomeric layer 250 or alternatively onto another elastomeric layer covering the cord attachment elastomeric layer 250. As shown this layer is preferably wound onto the tire building core assembly 11 in strips of material, once these layers are applied they take the general shape of the outer surface 43 of the building core 11 which very closely can approximate the shape of the unvulcanized tire to be molded into a finished product as shown in figures 2A - 2C. The importance of this type of construction is the cords 32A and 32B are not forced to conform from a flat layer to a toroidal shaped tire as is done in a variety of typical tire building methods. The present invention has the cords 32A and 32B applied on a contour building surface 43 directly to a first elastomeric layer 250 that closely matches the contours of the finished tire 300.

The first embodiment tire 300 has a casing 302 which has the first ply cord 32A extending from an initial end 33A of the cord 32A at or below the bead stack 220 sandwiched or otherwise interposed between the axially inner bead stack 222 and axially outer bead stack 224. Similarly positioned is the initial end 33A and terminal end 33B of the second ply cord 32B. As shown in Figure 12A, between ends 33A and 33B, the ply cord 32A is positioned to extend radially oriented up to the first shoulder 201, typically at 90 degrees or thereabout, to form the first ply reinforcement on one sidewall of the casing and as the cord 32A continues over the first shoulder 201 the angle of the cord 32A changes to a bias angle, preferably between 17 degrees to 27 degrees as measured at the equatorial centerplane of the tire casing 302. As the ply cord 32A reaches the second shoulder 202 the cord 32A is turned 180 degrees to form a shoulder return end 32S, this shoulder return end 32S enables the cord 32A to follow a cord path back across the crown 204 of the tire casing 302 parallel to the bias angle of the previously applied cord between the second shoulder 202 and the first shoulder 201. Thereafter the cord 32A changes to a radial orientation parallel to the prior laid cord and as the cord 32A reaches a position at or below the axially inner bead stack 220 a radially inner return 32R is formed. This ply path is repeated back and forth until the terminal cord end 33B is reached which, in the preferred embodiment, is cut to be positioned at or below the bead stack 220. This construction can be applied on casing 302 of the tire 300 in one continuous length of cord 32A around 360 degrees of the tires surface or more preferably a plurality of continuous lengths of cords 32A over arcuate segments of the tire in any portion of the tires arcuate length to form a 360 degree coverage from a plurality of continuous lengths of cords 32A. As will be discussed later the equipment used to build the tire 300 can have the ply cords 32A and 32B applied using multiple cord applicators which can traverse simultaneously arcuate segments of the tires circumference and thus speed up the time to create the cord reinforcement ply path. If multiple cord applicator beads are employed, there will be several or a plurality of such continuous lengths of ply cords 32A or 32B each having lengths defined by an initial and terminal end.

As shown in Figure 12B, in this embodiment the second ply cord 32B is formed starting on the opposite side of the tire casing 302 at the second bead stack 220. The initial end 33A and return ends 32R are similarly positioned between the axially inner bead stack 222 and the axially outer bead stack 224, the outer stack 224 which is applied after the ply paths are completely formed. Thereafter the second ply cord 32B extends radially outwardly to the second shoulder 202 where the cord path changes to a bias angle as measured at the equatorial plane preferably in the range of 17 degrees to 27 degrees, equal but oppositely oriented relative to the first ply cord 32A in this crown region 204. As the second ply cord 32B reaches the first shoulder region 201 a shoulder return 32S is formed and the cord 32B is directed back along a parallel path to the second shoulder 202 where the ply path returns to a radial orientation to the same bead stack 220 where a radially inner return 32R is formed and this ply path is repeated back and forth to form the second continuous cord reinforcement 32A around the entire circumference in one or more continuous lengths of second ply cords 32B. Only a fraction of the cord 32B is shown applied to the casing for clarity purposes.

An important aspect of this construction is the continuous lengths of cords 32A, 32B form both the ply cords and the belt cords of the tire casing 302.

Another unique feature is this casing construction has no cut end of cords in the working area of the tire 300 anywhere above the bead stacks 220. Also there are no bead turnups to create any stress areas affecting the tires durability.

Also this casing construction has the belt regions formed with no underlying radially extending ply cords extending across the crown 204 between the shoulders 201, 202. The cord path, as shown, gently transitions from a radial angle to a bias angle and goes back from bias to radial without any sharp transitions. This helps increase durability in this region of the tire 300. The absence of these underlying radial cords provides a lighter and more cost efficient structure as does the elimination of ply turnups. In the illustrated embodiment, the cords 32A and 32B are almost entirely positioned in the region above the bead stacks 220, excepting for the anchoring portions sandwiched between the bead stacks 220.

As shown in Figure 11 the tire casing 320 may additionally add an overlay layer 260 of spirally wound cords over either the first 201 and second 202 shoulder regions or across the entire crown 204 as illustrated.

These and other components such as chippers, flippers, runflat inserts or gum strip layers may be applied as needed for a particular tire application.

As illustrated above the ply cords 32A and 32B can be made of aramid, flexten or steel or any other suitable material for tire cord reinforcement.

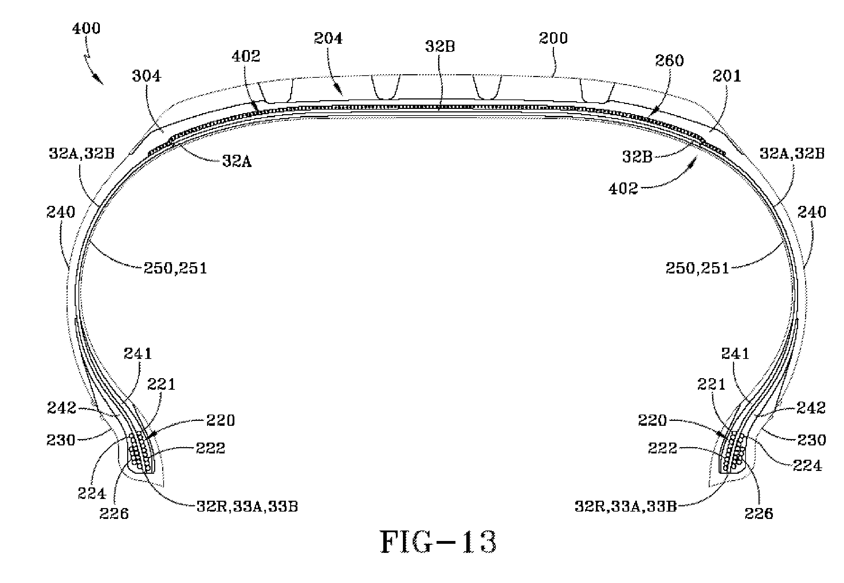

With reference to Figures 13, 14A and 14B a second alternative embodiment tire 400 is shown in the tire 400 the use of two ply cords 32A and 32B is again shown. In this embodiment the same building technique can be employed, however, as the first ply cord 32A extends radially to the first shoulder 201 and transitions to a bias angle as it extends to the second shoulder 202 and then transitions to a radial orientation to the second bead stack 220. At a location at or radially inward of the axially inner bead stack 222 a radially inner cord return 32R occurs and the ply path is reversed parallel to the original path and returns to the first bead stack 220 to create another radially inner return 32R and this is repeated across the tire 400 until reaching a terminal location wherein a terminal end 33B is cut and positioned preferably at or below the bead stack 220. The cord path can extend 360 degrees around the circumference or in an arcuate fraction of that and thus may be constructed using one or more continuous lengths of cords 32A in forming the casing structure 402.

A second ply cord path is then or simultaneously being applied using one or more continuous lengths of second ply cords 32B. As shown in Figure 14B, for simplicity the second ply cord 32B is said to initiate at the second bead stack 220, however, in this embodiment the initial ends 33A or terminal ends 33B could start or end from either bead stack 220. The important aspect is the second ply cord 32B is repeatedly positioned between two first ply cords 32A to form the sidewall cord reinforcements and as the second ply cord 32B radially approaches a first or second shoulder 201 or 202 it transitions from a radial angle to a bias angle equal, but opposite to the first ply cord 32 in this crown region 204. In this construction the beneficial aspects of the first embodiment are all maintained but there are not shoulder returns, only radially inner returns 32R. This effectively saves a substantial amount of cord length, reduces time to construct and effectively strengthens the casing structure 402 as the belt cords, being a continuation of the ply cords on each side of the tire casing 402 are completely anchored to the bead stacks 220. This ability to create such a structure improves tire durability beyond any known manufacturing process used to date.

An important aspect of the present invention is the cord spacing per inch in the sidewall region or the belt region is not limited to the bend radius potential of the ply cord being used. As shown in the second embodiment 400 to add more cords per inch commonly referred to as ends per inch (epi) in either embodiment one simply needs to apply additional continuous lengths of cords 32A or 32B between the already applied cords of any given ply path, in so doing the returns either radial inner 32R or, if used shoulder returns 32S will overlap but the epi can be doubled or even tripled if so desired without adversely affecting the construction of either tire embodiment. It is understood ends per inch is a misnomer in the present invention as there are as few as four ends per tire.

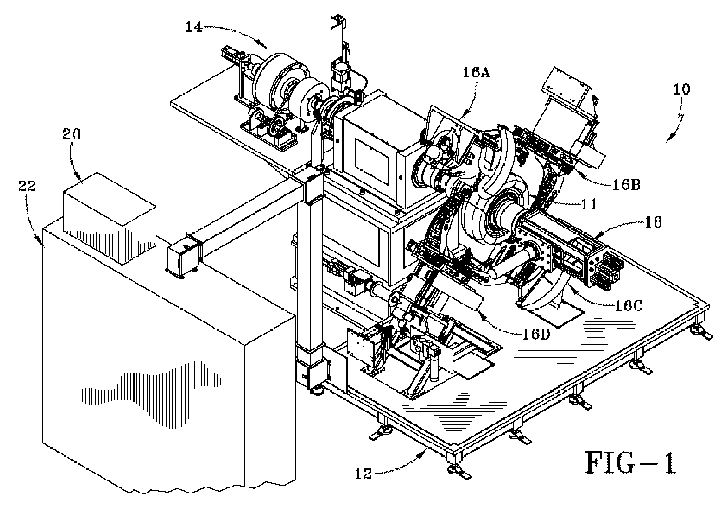

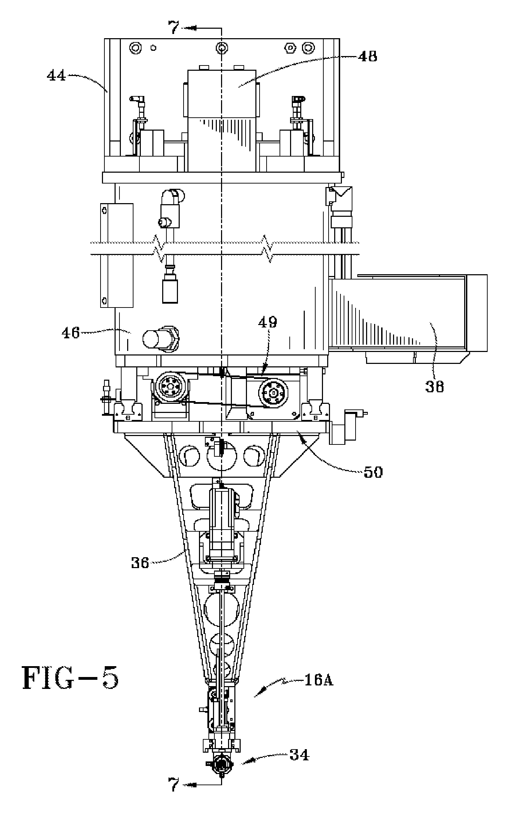

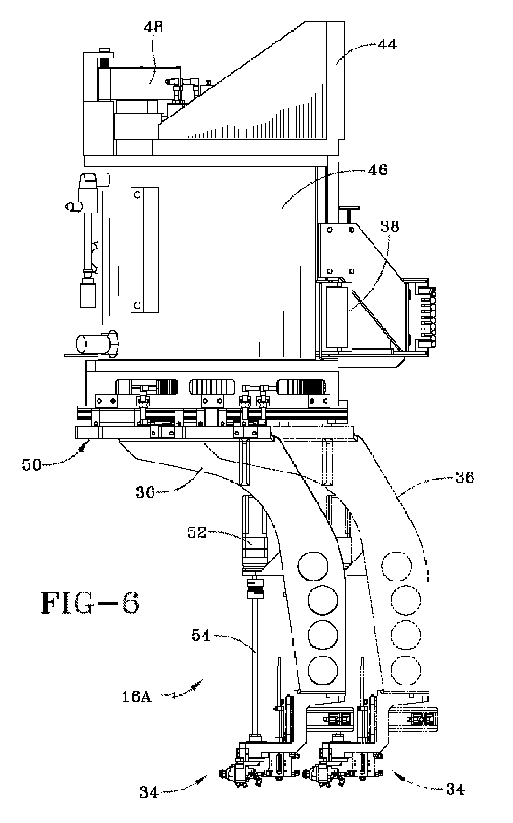

One way to achieve this design feature is to use the multiple tire cord applicator assembly as described below and shown in Figures 1-10.

Referring initially to FIG. 1, a machine assembly 10 is shown for the construction of a tire on a core assembly 11. The core assembly 11 is generally of toroidal shape and a tire is formed thereon by the sequential layering of tire components on the toroidal form of the core. A platform 12 may be deployed as support for the machine assembly 10. A drive motor 14 is coupled by a conventional shaft to rotate the core assembly 11 as tire component layers are sequentially applied to the toroidal core.

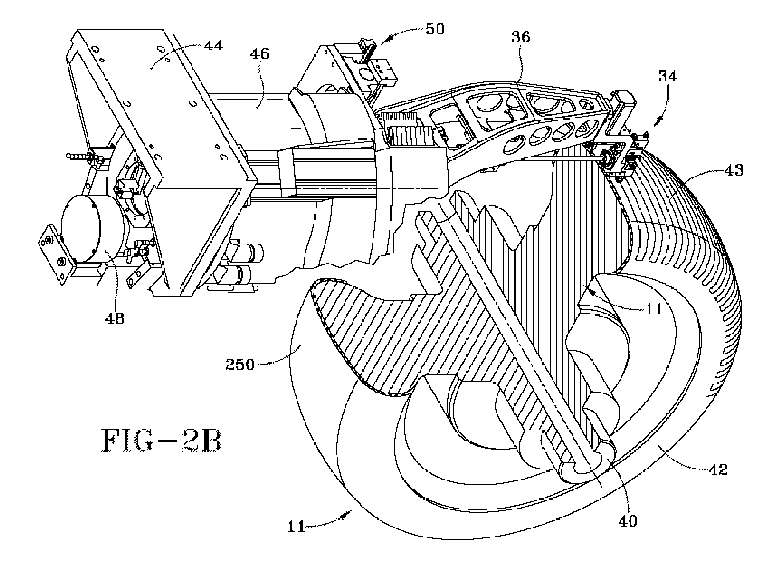

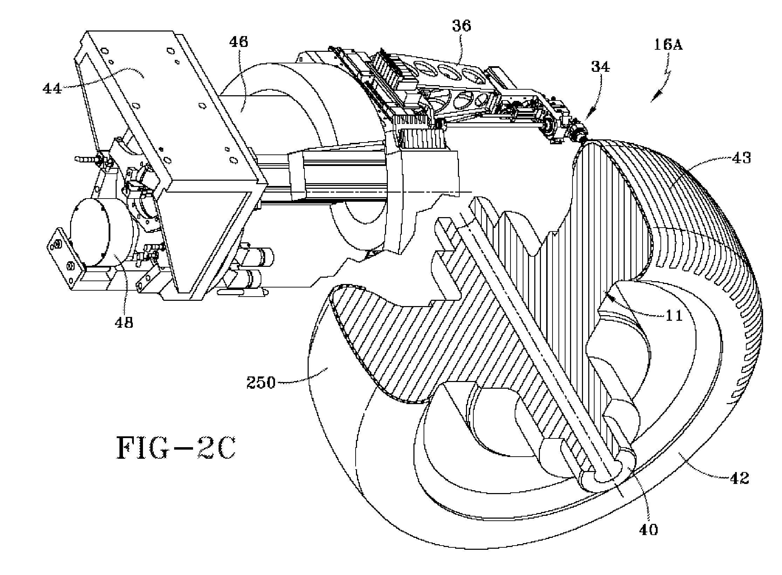

The referenced drawings (FIGS. 1 and 2) depict four arm assemblies 16 A-D surrounding the core assembly in a preferred arrangement. While four assemblies are incorporated in the machine assembly 10, the invention is not to be so limited. A single arm assembly may be used if desired. Alternatively, more or fewer than four assemblies may constitute the system if desired. The four arm assemblies 16 A-D are disposed to surround the core assembly 11 at a preferred spacing that allows the arm assemblies to simultaneously construct a cord ply to respective regions of the toroidal core. Dividing the surface area of the toroidal core into four quadrants, each assigned to a respective one of the four arm assemblies, allows the cord ply layer to be formed simultaneously to all four quadrants, whereby expediting the process and saving time and manufacturing cost.

In FIG.2, a core removal assembly 18 is shown disposed to remove the core assembly 11 from between the arm assemblies 16 A-D once tire construction on the core is complete. An appropriate computer control system conventional to the industry may be employed to control the operation of the system 10 including arm assemblies 16 A-D. A control system of the type shown will typically include a housing 22 enclosing the computer and system control hardware. Electrical control signals will be transmitted to the system 10 by means one or more suitable cable conduit such as that show at numeral 23.

Each of the arm assemblies 16A-D is serviced by a cord let off assembly or spool 28, only one of the four being shown in FIG. 2A-C for the sake of clarity. A balancer assembly 30 is associated with each let off assembly 28 for placing cord 32 fed from the assembly 28 in proper tension and balance. The cord 32 is fed as shown through the balancer assembly 20 to the arm assembly 16D.

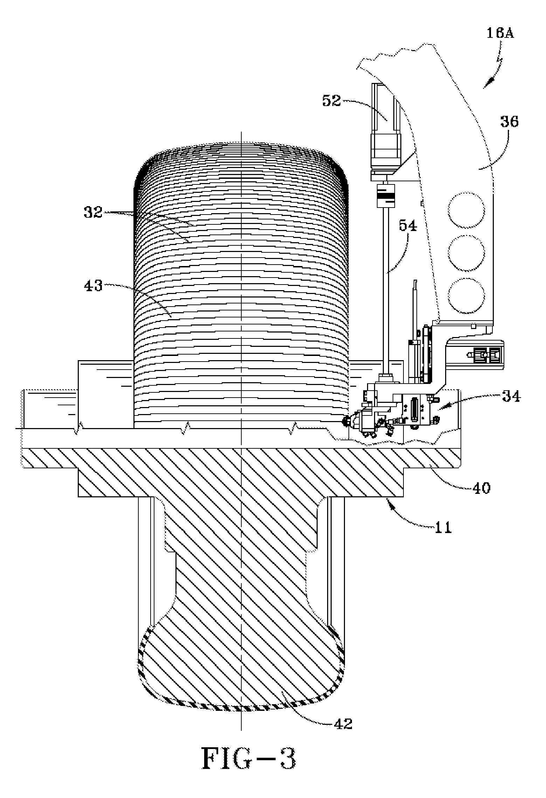

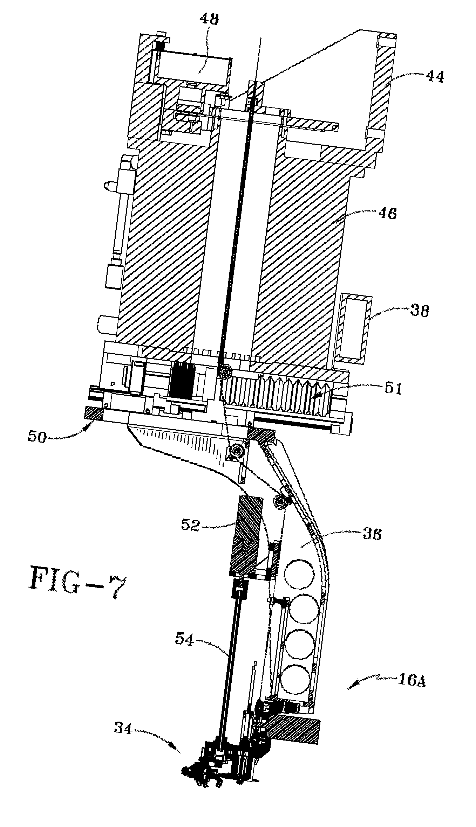

In FIGS. 2A-C and 3, operation of one arm assembly 16A is sequentially depicted and will be readily understood. The arm assembly 16A is configured to provide end of arm tooling assembly 34 carried by C-frame arm 36, electrically serviced by suitable cabling extending through cable tray 38. As explained previously, the core assembly 11 is configured having a rotational axial shaft or spindle 40 and a segmented toroidal core body 42 providing an annular outer toroidal surface 43. A main mounting bracket 44 supports the end of arm tooling assembly 34 as well as a drive motor 46 and clutch assembly 48. As best seen from joint consideration of FIGS. 2A-C and 3, the C-frame arm 36 is slideably attached to a Z-axis vertical slide member 50 and moves along a Z-axis to traverse the width of the outer core toroidal surface 43. Movement of the arm 36 along slide member 50 facilitates the laying of cord on cores for tires of varying sizes. FIG. 2A depicts the arm assembly 36 at a beginning position relative to surface 43; FIG. 2B a position mid-way along the transverse path across surface 43; and FIG. 2C a terminal transverse position of assembly 36 at an opposite side of the surface 43. The movement of arm assembly 36 along slide 50 facilitates movement of assembly 36 between the sequential positions illustrated in FIGS. 2A-C. Drive shaft 51 is coupled to the arm assembly 36 as seen from FIG. 7 and drives the assembly along the Z-axis path in reciprocal fashion responsive to control instructions.

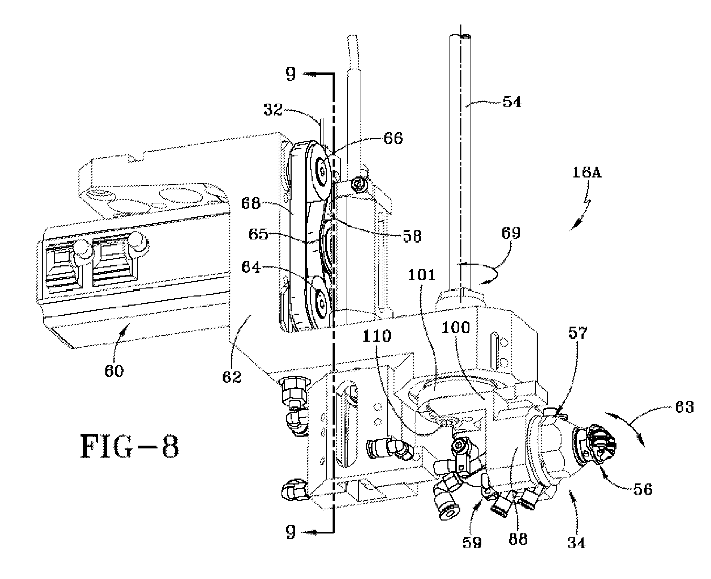

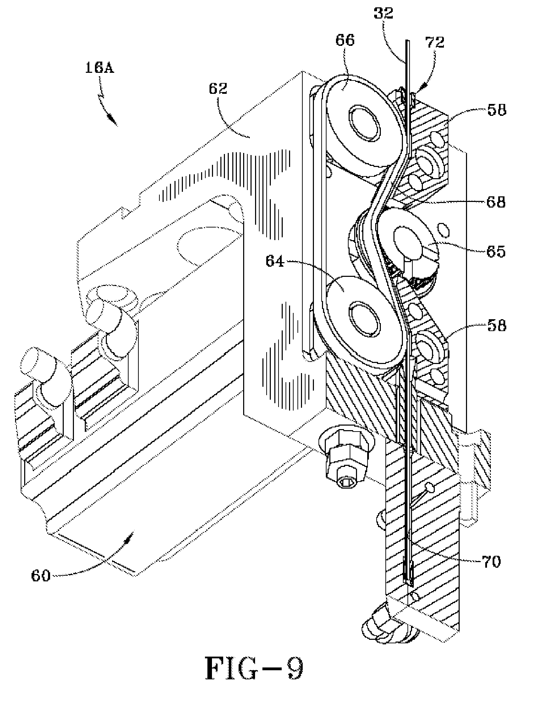

As shown in FIGS. 3, 4, 6, 7 and 8, an end of arm tooling motor 52 is further mounted on arm assembly 36 and rotatably drives end of arm tooling shaft 54. The end of arm tooling 34 consists of a bi-directional cord laying head assembly 56, an intermediate housing assembly 57, and an upper housing assembly 59. The end of arm tooling 34 further includes a cord tensioning sub-assembly 58 as shown in detail in FIGS. 8 and 9. Sub-assembly 58 includes a drive motor 60, the motor 60 being mounted on an S-shaped block 62. The sub-assembly 58 further includes a first pulley 64; a spatially adjustable cord pulley 65; and a third pulley 66. An elongate closed-end tensioning belt 68 routes around the pulleys 64, 66 as shown. A cord guiding terminal tube 70 extends from the pulley and belt tensioning region of assembly 58 through the block 62. An initial cord guiding passageway 72 enters into the block 62 and guides cord 32 through the block and into the tensioning region of assembly 58. Belt 68 is routed around pulleys 64, 66 and is rotated thereby. It will be appreciated that the cord 32 is routed as shown between belt 68 and pulley 65 and is axially fed by the rotation of belt 68 through the assembly 58. By adjusting the relative position of pulley 65 against the cord 32 and belt 68, the cord 32 may be placed in an optimal state of tension for subsequent routing through an applicator head. The tensioning of the cord 32 is thus optimized, resulting in a positive feed through the block 62 and to an applicator head as described following. Breakage of the cord that might otherwise occur from a more or less than optimal tension level is thus avoided. Moreover, slippage of the cord caused by a lower than desired tension in the cord is likewise avoided. Additionally, the subject cord tensioning sub-assembly 58 acts to eliminate pinching of the cord that may be present in systems employing rollers to advance a cord line. Pinching of the cord from a roller feed may act to introduce a progressive twist into the cord that will release when the cord is applied to a surface, and cause the cord to move from its intended location. The assembly 58, by employing a belt cord advance, eliminates twisting of the cord and ensures that the cord will advance smoothly without impedance.

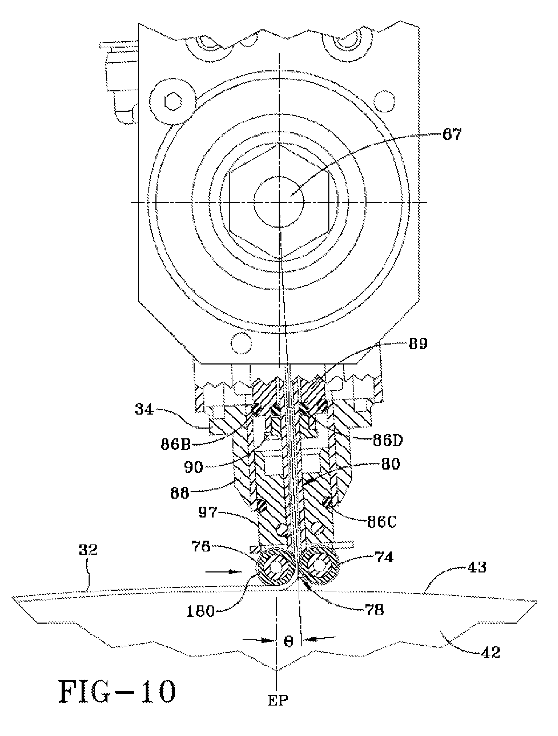

From FIG. 8, it will be appreciated that the end-of-arm tooling assembly 34 is pivotally mounted to the bracket 62 and is fixedly coupled to motor shaft 54. Shaft 54 is driven rotationally by a computer controlled servo-motor (not shown) in conventional fashion. A rotation of the shaft 54 translates into pivotal movement of assembly 34. As the assembly 34 pivots, the rollers 74 and 76, shown in FIG. 10, tilt or pivot backward and forward, alternatively bringing the rollers into contact with the core surface 43.

As seen from FIGS. 2A-C and 3, end of arm tooling 34 mounts to the C-frame arm 36 and is carried thereby toward and away from the surface 43 of core 42. The C-frame arm 36 is slideably mounted to the Z-axis slide 50 and reciprocally moves end of arm tooling 34 laterally across the surface 43 in a predefined pattern. Adjustment in the Z axis along slide 50 is computer controlled to coordinate with the other axis of adjustment of end of arm tooling 34 to allow for the application of cord to cores of varying sizes. The cord 32 is dispensed from cord let-off spool 28, through a conventional balancer mechanism 34 and to the arm assembly. The end of cord 32 is routed at the end of arm cord tensioning assembly 58 (FIGS. 3 and 9) and then into the axial passageway through end of arm tooling assembly 34. Upon entering assembly 34, the cord 32 passes through a tubular member of a cable shear assembly (not shown) and then proceeds along the axial guide passage 80 to the cord outlet 78 between rollers 74, 76. The cord is received within a circumferentially located roller channel 180 in each roller 74, 76, the roller receiving the cord being dependent upon the intended direction of travel of the cord across surface 43 pursuant to the predefined pattern. Appropriate pressure of the cord 32 by either roller 74 or 76 against a pre-applied carcass layer on core 42 causes the cord to adhere to the carcass layer at its intended location, thus forming the designed cord layer pattern.

Referring to FIG. 10, the alternative tilting operation of the end of arm tooling in regard to rollers 74, 76 will be explained. The rollers 74, 76 tilt along an angular path represented by angle θ relative to the centerline of the end of arm tooling. Alternatively one or the other roller is in a dependent position relative to the other roller as a result of the pivotal movement of assembly 34. In a forward traverse of the tooling assembly across a carcass layer mounted to the core surface 43, one of the rollers will engage the cord 32 within roller channel 180 and stitch the cord 32 against the layer. For a reverse traverse of the tooling head across the carcass layer, the assembly 34 is tilted in a reverse direction to disengage the first roller from the cord 32 and place the second roller into an engaging relationship with cord 32. The second roller then effects a stitching of the cord 32 against the carcass layer mounted to core 42 in a reverse traverse.

The reciprocal pivotal movement of the end of arm tooling 34 is carefully coordinated with rotational indexing of the core 42 and lateral movement of the tooling assembly 34. Referring to FIG. 8, it will be appreciated that the subject assembly 34 in combination with the core drive constitutes a system having three axis of rotation. A first axis is represented by a pivoting of assembly 34 through an angular tile by the drive shaft 54. Shaft 54 is preferably driven by a computer controlled servo-motor 52. A second axis of rotation is the lateral rotation of the assembly 34 driven by motor 46 (FIGS. 2A-C). Motor 46 is preferably, but not necessarily a computer controlled ring motor that, responsive to computer generated control signals, can accurately index the assembly 34 along a rotational path following the outer surface 43 of the core 42. A third axis of rotation is the indexing of the core spindle 40 by motor 14 (FIG. 1). Motor 14 is preferably, but not necessarily a ring motor that, responsive to computer generated control signals, can accurately index the core 42 in coordination with the ring motor 46 rotationally driving the assembly 34.

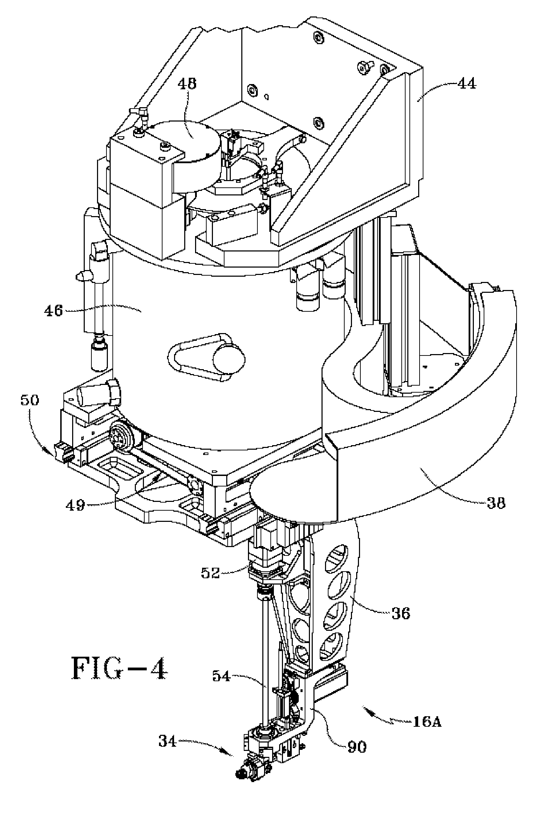

The arm assembly 16 A, carrying end of arm tooling 34, is further adjustable along a linear path representing a z-axis as shown in FIGS. 4, 5, 6, and 7. The arm assembly 16A travels along the slide 50 controlled by a timing belt drive 49. Movement of the assembly 16 A along slide 50 is computer controlled to correlate with the size of the core on which the cord is applied. One or more computers (not shown) are employed to coordinate rotation of core 42 (by ring motor 14); rotation of end of arm tooling assembly 34 (by ring motor 46); linear path adjustment of assembly 16A along the Z-axis (by timing belt drive of assembly 16A along slide 49); and tilting adjustment of assembly 34 (by servo-motor 52). The assembly thus precisely controls the movement of assembly 16A in three axis of rotation and along a linear path (slide 50) to enable tooling assembly 34 to accurately place cord 32 in an intended pattern on a surface 43 of a core 42 of varying size without need for specialized equipment to form a loop in the cord at the end of each traverse. Creation of the loop at the conclusion of each traverse is accomplished by an indexed controlled rotation of the core 42. Thus, the cord laying assembly functions to form the loop without the need for a finger mechanism to engage, press, and release the cord. The pattern of cord applied to the carcass layer upon core 42 may thus be tailored to provide optimum performance while conserving cord material, resulting in reduced cost of manufacture.

As will be appreciated, a reciprocal pivoting movement of the end of arm tooling head that alternately places one of the rollers 74, 76 into engagement with cord 32 while disengaging the opposite roller results in several significant advantages. First, in disengaging one of the rollers from the carcass layer, the frictional drag of the disengaged roller is eliminated. As a result, the associated drive motor that drives the end of arm tooling may operate with greater speed and efficiency. Additionally, redundant and unnecessary engagement of the disengaged roller from the cord 32 with the underlying elastomeric layer and the cord is eliminated, reducing the potential for damage to both the cord 32 and the underlying carcass layer. Moreover, in utilizing dual rollers mounted in-line, the speed of cord application is at which the cord 32 is applied to the carcass may be improved and the drive mechanism simplified.

It will be appreciated that the application head portion of the tooling 34 is air spring biased against the surface 43 of core 42 during the application of cord 32 through pressurized intake 94. The air spring created by an intake exerts a substantially constant force through nose housing 97 to rollers 74, 76. The biasing force upon rollers 74, 76 is applied to cord 32 as described above, and serves to pressure the cord 32 against a carcass layer previously applied to the core surface 43. The tackiness of the pre-applied layer retains the cord 32 at its intended placement. A more secure placement of the cord 32 results, and the potential for any unwanted, inadvertent post-application movement of the cord 32 from the underlying carcass layer is minimized.

With reference to FIGS. 1 and 2, it will further be appreciated that a plurality of like-configured arm assemblies 16 A-D may, if desired at the option of the user, be deployed at respective circumferential locations about the core 42 in operable proximity to the core surface 43. The annular core surface 43 may be divided of segmented into regions, with responsibility for each region assigned to one or more of the arm assemblies 16A-D. Actuation and utilization of each arm assembly 16A-D in laying down a cord pattern in each assembly's respective region of responsibility may be coordinated and occur substantially in unison. Operation of the arm assemblies 16A-D are computer controlled and the control of the assemblies is preferably synchronized such that completion of a cord ply will occur by the simultaneous operation of each arm assembly within their respective assigned annular surface region.

It will be appreciated that, by segmenting the core annular surface 43 between the multiple arm assemblies 16A-D, a faster completion of the cord ply, and hence a faster cycle time for completion of the finished tire, results. While four arm assemblies 16 A-D are shown, more or fewer arm assemblies may be deployed if desired.

Referring to FIG. 10, to advance the cords 32 on a specified path, the end of arm tooling mechanism 34 which contains the two rollers 74, 76 forms the cord outlet 78 which enables the cord path to be maintained in this center. As illustrated, the cords 32 are held in place by a combination of embedding the cord into an elastomeric layer 250 previously placed onto the toroidal surface 43 and the surface tackiness of the uncured compound. Once the cords 32 are properly applied around the entire circumference of the toroidal surface 43 a subsequent lamination of elastomeric topcoat compound (not shown) can be used to complete the construction of the ply. It will be appreciated that more than one cord layer may be applied to the core 42, if desired or required. Additional elastomeric layers may be added to the core and additional cord layers applied as described above. Optionally, if desired, the top or bottom coat of elastomeric material may be eliminated and the cord applied in successive layers to form multiple plies on the core 42.

As illustrated and explained previously, the first roller 76 will embed the cord 32 on a forward traverse across the toroidal surface 43 as illustrated in Fig. 10. Once the cord path has been transferred across the toroidal surface 43 the mechanism 34 stops and the cord 32 is advanced along the toroidal surface 43 by rotation of the core 42. The mechanism 34 then reverses its path forming a loop in the ply cord path. At this point a tilting of the end of arm tooling head block 97 causes the first roller 76 of the pair to disengage and the second roller 74 to engage the cord 32 to pull the cord 32 back across the toroidal surface 43. In the preferred embodiment the toroidal surface 43 is indexed or advanced slightly allowing a circumferential spacing or pitch to occur between the first ply pathway down in the second return ply path. The loop that is formed on the reverse traverse is slightly shifted to create the desired loop position. A looped end may be formed and the second ply path may be laid on the toroidal surface 43 parallel to the first ply path, or other geometric paths may be created by selective variation in the core indexing (rotation) coupled with the speed at which the end of arm tooling head traverses the core surface 43 in the forward and/or reverse directions.

The process is repeated to form a series of cords 32 that are continuous and which have the intended preselected optimal pattern. For example, without intent to limit the patterns achievable from the practice of the invention, the toroidal core 42 with the toroidal surface 43 with an elastomeric first layer 250 laminated onto it may be indexed or advanced uniformly about its axis with each traverse of the pair of rollers 74,76 to create a linearly parallel path uniformly distributed about the toroidal surface 43. By varying the advance of the cord 32 as the mechanism 34 traverses, it is possible to create non-linear parallel cord paths to tune tire stiffness and to vary flexure with the load.

Preferably the cord 32 is wrapped around the tensioner assembly 58 to adjust and maintain the required tension in the cord 32 (FIG. 10). The pulley 65 is laterally adjustable to alter the tension in the belt 68 which, in turn engages the cord 32 passing beneath pulleys 64, 66 and over pulley 65. More or less tension in the belt 68 translates into more or less tension in the cord 32. If the cord 32 is too tight it will lift the cord from the coat laminate when the rollers 74, 76 reverse direction. If it is too loose it will not create a loop at the correct length. Moreover, the amount of tension applied has to be sufficiently small that it does not lift the cords 32 from their placed position on the toroidal surface 43. The cord 32 under proper tension will rest on the toroidal surface 43 positioned and stitched to an elastomeric layer such that the tack between the cord 32 and the elastomeric layer is larger than the tension applied by the tensioner assembly 58. This permits the cords 32 to lay freely onto the toroidal surface 43 without moving or separating during the ply construction period.

## Claims

1. A tire casing formed on an annular toroidally shaped building surface, the tire casing (302) comprising:
a cord attachment elastomeric layer (250) extending over the toroidally shaped building surface to a pair of radial inner ends (32R);
a first and second bead stack (220), each bead stack (220)having an axially inner stack (222) and an axially outer stack (224), wherein the axially inner stack (222) is attached to one of the radial inner ends (32R) of the cord attachment elastomeric layer (250);
one or more continuous lengths of first ply cords (32A), the one or more continuous lengths of first ply cords (32A) each having two ends and a plurality of radially inner return loops between the axially outer stack (224) and the axially inner stack (222) of the first bead stack (220), the first ply cords (32A) extending in a radial orientation along a contour of the building surface to a first shoulder region wherein the inclination changes from radial to a bias angle across a crown region to a second shoulder wherein a shoulder loop is formed and the first ply cord (32A) returns along parallel to the bias angle to the opposite first shoulder and changes to a radial angle to a radially inner return loop at or below the first bead stack (220) in a repeating fashion from the first bead stack to the second shoulder;
one or more continuous lengths of second ply cords (32B) extending from the second bead stack (220) to the second shoulder in a radial inclination and thereafter changing orientation to a bias angle equal but oppositely oriented relative to the bias angle of the first ply cord (32A) and extending to the first shoulder wherein a shoulder loop is formed and the second ply cord returns along parallel to the bias angle of the second ply cord to the second shoulder and changes to a radial angle to a radial inner return loop at or below the second bead stack (220) in a repeating fashion; and
wherein the one or more continuous lengths of the first ply cords (32A) in combination with the one or more continuous lengths of the second ply cords (32B) form a bias angled cord reinforced belt structure, the first ply cords (32A) forming one cord reinforced sidewall and the second ply cords (32B) forming an opposite cord reinforced sidewall.

2. The tire casing of claim 1 wherein each of the one or more continuous lengths of the first ply cord and the second ply cords have the two ends being an initial end and a terminal end defining the continuous length of each of the first or second ply cords.

3. The tire casing of claim 1 or 2 wherein each initial end and each terminal end is located between or radially inward of the axially inner and axially outer first or second bead stacks.

4. The tire casing of at least one of the previous claims wherein each of the continuous lengths of first ply cords when applied to the casing extend arcuately between 30 degrees and 360 degrees around the circumference.

5. The tire casing of at least one of the previous claims wherein each of the continuous lengths of second ply cords extends arcuately between 30 degrees and 360 degrees around the circumference.

6. The tire casing of at least one of the previous claims further comprising an inner liner layer having a pair of radially inner ends; a pair of sidewalls; and a pair of chippers with one chipper being attached to each end of the inner liner.

7. The tire casing of at least one of the previous claims wherein the continuous lengths of the first ply cord or cords are secured between the first bead stacks and do not extend to the opposite second bead stack, and the continuous lengths of the second ply cord are secured between the second bead stacks and do not extend to the first bead stack.

8. The tire casing of at least one of the previous claims wherein the continuous length of each first ply cord forms one radially extending cord reinforced arcuate portion between the first bead stack and the first shoulder and one cord reinforced belt arcuate portion extending along a bias angle of 17 degrees to 27 degrees between the first and second shoulders.

9. The tire casing of at least one of the previous claims wherein the continuous lengths of the second ply cord form one radially extending cord reinforced arcuate portion between the second bead portion and the second shoulder and one cord reinforced belt arcuate portion extending along a bias angle of 17 degrees to 27 degrees between the second first and shoulders equal but opposite oriented relative to the belt portion of the first ply cord.

10. The tire casing of at least one of the previous claims wherein the continuous lengths of ply cords between the first and second shoulders form two oppositely oriented belt layers in the absence of any underlying radially oriented ply cords between said shoulders.

11. A tire casing formed on an annular toroidally shaped building surface, the tire casing (302) comprising:
a cord attachment elastomeric layer (250) extending over the toroidally shaped building surface to a pair of radial inner ends (32R);
a first and second bead stack (220), each bead stack (220) having an axially inner stack (222) and an axially outer stack (224) wherein the axially inner stack (222) is attached to one of the radial inner ends (32R) of the first elastomeric layer (250); and
one or more continuous lengths of first ply cords (32A), each of the one or more continuous lengths of first ply cords (32A) having two ends defining the length and a plurality of first return loops and a plurality of second return loops located at or below the bead stacks (220) between the axially outer stack (224) and the axially inner stack (222) of the respective first and second bead stacks (220); the first ply cords (32A) extending in a radial orientation from a first bead stack along a contour of the building surface on the cord attachment elastomeric layer to a first shoulder region wherein the inclination changes from radial to a bias angle across a crown region to a second shoulder region wherein the inclination changes to a radial angle to form a first ply path at a radially inner return loop at or below the second bead stack and the continuous length of the first ply cord (32A) returns spaced but parallel to the first ply path to a return loop at or below the first bead stack in a repeating fashion;
one or more continuous lengths of second ply cords, each of the one or more continuous second ply cords (32B) extending in a similar repeating fashion as the first ply cords between the first and second bead stacks to form a second ply path, wherein the bias angle between the first shoulder and the second shoulder is equal but oppositely oriented relative to the bias angle of the first ply path; and
wherein the one or more continuous lengths of the first ply cords (32A) in combination with the one or more continuous lengths of the second ply cords (32B) form both radially oriented sidewall cords and a bias angled cord reinforced belt structure.

12. The tire casing of claim 11 wherein the first ply cords (32A) are spaced circumferentially with second ply cords (32B) lying between each pair of first ply cords (32A) in a repeating pattern.

13. The tire casing of claim 11 or 12 wherein the bias angle of the first and second ply cords (32A, 32B) between the first and second shoulders, as measured at an equatorial center plane of the casing (302), are equal but oppositely oriented at an angle between 17 degrees and 27 degrees.

14. A tire comprising the tire casing (302) of one of the previous claims and a tread.
